# EUROPEAN PATENT APPLICATION

(11) **EP 0 895 767 A1**
(43) Date of publication of application: **10.02.1999**
(21) Application number: 97500135.5
(22) Date of filing: 06.08.1997
(51) Int. Cl.: A61G 5/12, B60B 1/04

(54) **Wheelchair**

(71) Applicant: Sunrise Medical, S.L., 48498 Arrankudiaga, Vizcaya (ES)
(72) Inventor: Diaz Fernandez, Armando, 48498 Arrankudiaga, Vizcaya (ES); Lopez Lopez, Arturo, 48498 Arrankudiaga, Vizcaya (ES); Arraiz Abasolo, Juan Clemente, 48498 Arrankudiaga, Vizcaya (ES)
(74) Representative: Perez Bonal, Bernardo

(57) **Abstract**

Incorporating a connection part (5) for the armrest which couples onto an attachment element (6) associated to upper horizontal tube (2), resiliently formed and fitted at the lower end thereof with an inwardly folding central extension (8) wherefrom emerges a hook (9) which may be released from opening (10) defined in attachment element (6), and is also fitted with a connection part (11) for the footrest that is formed by a slanting tubular portion (12) onto which fits the footrest (4) tube, a rear horizontal extension (13) deriving from it being provided with a vertical hole (14) on its opposite end that couples onto a stud (15) protruding from the front vertical tube (1), furthermore being fitted with an actuator (16) that exerts pressure over shank (17), which is made to move inside hole (14) and contacts stud (15), which descends vertically to dislodge the footrest (4).

## Description

### OBJECT OF THE INVENTION

The present invention relates to a wheelchair which incorporates a means of connection allowing the footrest and the armrest to be folded, and is furthermore fitted with a wheel axis spindle which facilitates the tautening of the spokes.

An object of the invention consists in the connection means located at the end of the armrest and the footrest, with their corresponding attachment or securing system.

A further object of the invention lies in the chair's wheel axis spindle, fitted with coupling means which facilitate the attachment of the spoke ends to the wheel.

### BACKGROUND OF THE INVENTION

Wheelchairs are designed according to various possible embodiments, different components being applied to their structure based on common rigidity and performance criteria, adopting single-module construction structures which incorporate a series of bars designed and positioned in such a manner as to sustain the weight of the user over the seat and back of the chair, as well as over the armrest and footrest provided in the wheelchair and which form a part of the rigid structure thus formed.

Most wheelchairs contemplate, in one of their possible embodiments, a function whereby the footrest may be folded in order to allow the user to pass and/or to enable the chair to be folded when not in use.

The applicant owns invention patent GB 9523843.1, which consists in a folding wheelchair with a support structure formed essentially by a series of support tubes, including an elbowed tube acting as a telescopic extension armrest and footrest.

In the event that the footrest constitutes an obstacle for the user's entry or exit, the possibility of developing some simple means of folding is thus contemplated.

The armrest also foresees this circumstance under the same terms, since its rotational character allows a handicapped person better access from or toward a bed, for example, providing highly satisfactory results in regard to increasing the wheelchair's functions.

On the other hand, wheelchairs comprise wheel spoke tautening means consisting in a nut associated to the upper end of the spoke which is rotated after the lower end, which normally finishes in a hooked shape, is inserted in a hole drilled in a plate of a reduced size.

The spoke is loose at its lower end until tauted, this operation posing some problems precisely because of the fact that the lower end is loose.

The solution to these problems provides feasibility to the invention proposed hereunder.

### DESCRIPTION OF THE INVENTION

The wheelchair proposed by this invention covers the expectations discussed herein in a fully satisfactory manner by providing a means of connection for rotating the armrest and the footrest, as well as providing a wheel spindle of an optimum configuration.

The armrest connection means consist in a plastic part mounted over a tubular portion of the armrest, specifically over a curved or straight sector located at the front end and along the perimeter edge thereof, being attached at one point, and which may or may not be partially inserted in the tube.

Normally, this armrest connection part is of a curved geometry, with a likewise curved section ending in a lower central extension slightly folded inward and shaped as a hook, which hook is partially inserted in the tube along its back sector for the purpose of coupling onto an opening defined in a connection element associated to the side of the chair frame.

Said armrest connection part facilitates the uncoupling of its end from the frame, providing rotation to the rear armrest hinge and thus allowing free passage of the user along the side of the chair.

The armrest connection part is secured at one end to the armrest tube with the help of fastening means in respect to which it flexes slightly and consequently flexes the end hook, thereby facilitating extraction from said opening in the connection part, and is then inserted in the tube and raised until it becomes dislodged from the connection part.

Because of the resilient nature of the armrest connection part, no additional parts are required, the part acting as a hook and spring.

The footrest, as the armrest, is fitted with a hinge point around which it rotated sideways, thus allowing it to be folded in order to facilitate the user's entry and exit.

In order to allow its disengagement from the frame to enable rotation, the footrest is fitted with a connection part.

This footrest connection part consists in a plastic element with a slanting tubular portion into which is inserted the footrest tube, with a horizontal prolongation extending halfway along this tubular portion and ending in an arcuate sector which adapts over a vertical tube in the chair frame, said horizontal prolongation being fitted with a lower hole which is normally coupled over a stud protruding from the vertical frame tube when the connection part is lodged onto the frame.

Said hole consists in a vertical pass-though opening inside of which is fitted a shank acting under pressure from an internal spring, the shank being movable by means of a resilient material actuator consisting in a plate extending over the horizontal prolongation and resting adjacent its rear end over the shank which protrudes above the opening and which hinges when acted upon by stud bolts in respect to holes located at the front end, near the slanting tubular portion.

Thus, when the actuator is pressed, it rotates on one of its ends, the other end acting on the protruding shank and causing it to be inserted inside the hole so that it presses on the stud bolt, which descends and thus facilitates the extraction of the footrest connection part, which becomes dislodged from the frame and allows the footrest to rotate in respect to the frame.

Furthermore, the wheelchair wheel axes incorporate the spindles that house the roller bearings, onto which spindles are coupled the ends of the spokes, thereby proving an optimized geometry which helps in the spoke tautening operation.

The spindle is fitted with a series of initially radial grooves which extend inward as from the spindle perimeter and finish in a T-shaped lower end.

These grooves lodge the spokes incorporated to the longitudinal sector of the groove, the spoke end folding inside the transverse cavity in the groove and remaining fixed in said position.

The grooves facilitate the tautening of the spoke, which remains fixed by one end with the help of a cover coupled to one side of the spindle and thus prevents the spoke from breaking free from the supporting groove in the course of its tautening.

The shape of the spindle permits the use of straight spokes and can be made of plastic material, in view that its geometry provides the required strength.

The cover is fitted with inwardly projecting elevations which couple into holes drilled on the side wall of the spindle, so that the inner face of the cover prevents all possible removal of the spokes from their lodging.

### DESCRIPTION OF THE DRAWINGS

In order to add to this description and help toward a better understanding of the characteristics of the invention, a set of drawings is attached to this specification, forming an integral part thereof, wherein the following is represented in an illustrative and non-limiting character:

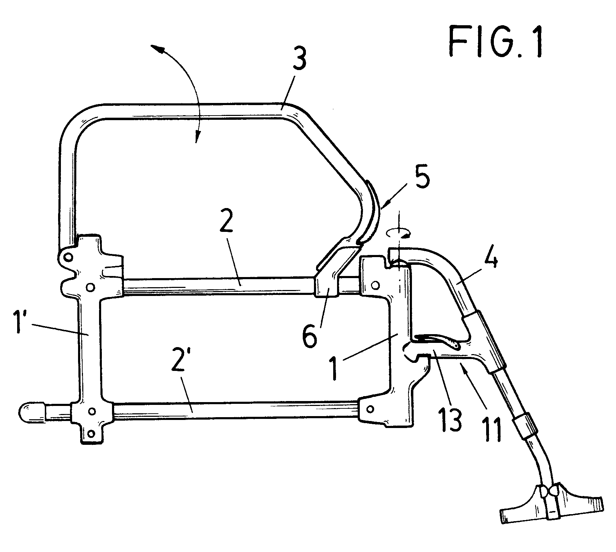

Figure 1 - Shows a side view of the wheelchair frame, revealing the wheelchair armrest with its means of connection to the frame and the footrest with its means of connection to the frame.

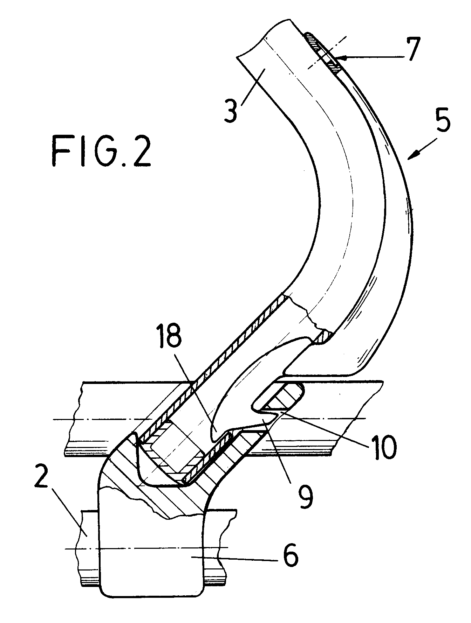

Figure 2 - Shows a side view of detail A of the preceding figure in relation to said armrest means of connection.

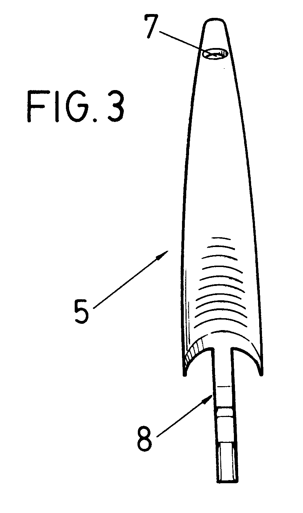

Figure 3 - Shows a front view of the armrest means of connection.

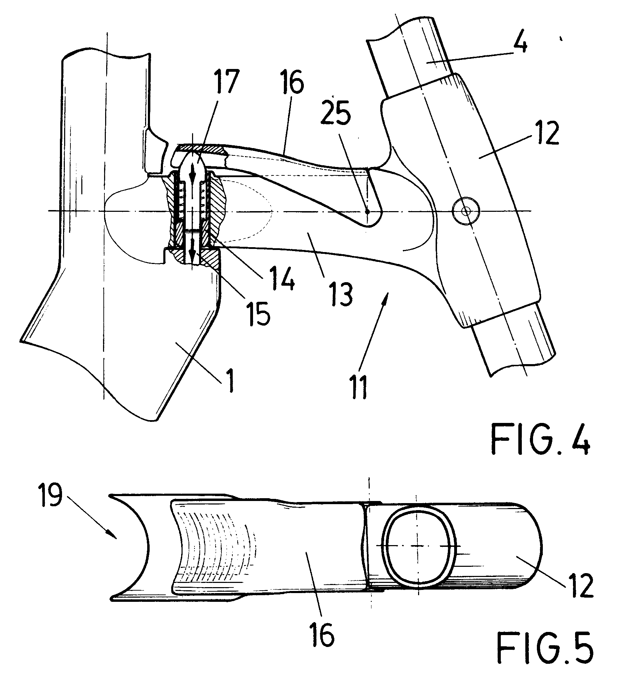

Figure 4 - Shows a side view of detail B of figure 1 in relation to the footrest means of connection.
Figure 5 - Shows a plan view of the footrest means of connection.

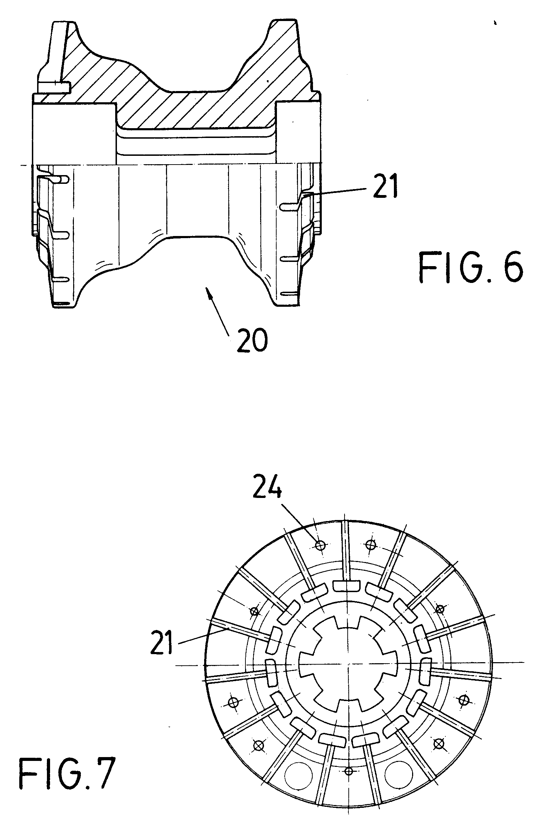

Figure 6 - Shows a side elevation view of the wheel spindle.
Figure 7 - Shows a front view of the wheel spindle.

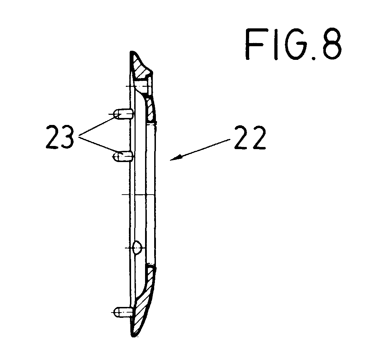

Figure 8 - Shows a side section view of the wheel spindle cover.

### PREFERRED EMBODIMENT OF THE INVENTION

In the light of these figures, a preferred mode of embodiment of the wheelchair with folding armrest and footrest is described hereunder, incorporating a frame constituted mainly by front (1) and rear (1') vertical tubes and upper (2) and lower (2') horizontal tubes, with an armrest (3) that hinges at the joint vertex between the upper horizontal tube (2) and the rear vertical tube (1'), and a hinged footrest (4) at the vertex defined between the front vertical tube (1) and the upper horizontal tube (2).

As from this basic configuration, the wheelchair is outstanding in that it features a connection part (5) for the armrest which couples onto an attachment element (6) associated to upper horizontal tube (2), said connection part (5) being formed of plastic material with a curved shape and a curved variable section, its upper end being fitted with a hole (7) which incorporates the attachment element that secures it to the armrest (3), and furthermore being fitted at the lower end thereof with an inwardly folded central extension (8) from which emerges a hook (9) which may de dislodged from an opening (10) defined in attachment element (6) by pressing on the armrest connection part (5).

The wheelchair also features a connection part (11) for the footrest, formed by a slanting tubular portion (12) onto which is fitted the footrest (4) tube, wherefrom emerges a rear horizontal extension (13) fitted with a vertical hole (14) on its opposite end that couples onto a stud (15) protruding from the front vertical tube (1) and is furthermore fitted with an actuator (16) in the form of a plate which pivots through respective internal stubs in its front end in respect to horizontal extension (13) and exerts pressure on a shank (17) which is made to move inside hole (14) and contacts stud (15), offsetting it vertically and thus dislodging the footrest (4).

The central extension (8) of armrest connection part (5) extends further along hook (9), forming a lower projection (18) abutting inside armrest (3) when the hook (9) is coupled onto the attachment element (6).

It should also be stated that the horizontal extension (13) of the footrest connection part (11) ends in an arched sector (19) adaptable over the front vertical tube (1).

The wheelchair is also outstanding in that it is provided with a wheel axis spindle (20) which incorporates radial grooves (21) inwardly ending in a T shape designed to secure the lower spoke ends, and is furthermore provided with a cover (22) fitted with protrusions (23) inserted in holes (24) on the side of the spindle (20) to prevent the spokes from becoming dislodged.

This description need not be more extensive for an expert on the subject to comprehend the scope of the invention and the advantages deriving therefrom.

The materials, shape, size and arrangement of the elements are liable to variation provided the essential aspects of the invention remain unaltered.

The terms used in describing this specification must always be construed in an ample, non-limiting sense.

## Claims

1. Wheelchair incorporating a frame formed by front (1) and rear (1') vertical tubes and upper (2) and lower (2') horizontal tubes, with an armrest (3) that hinges at the joint vertex between the upper horizontal tube (2) and the rear vertical tube (1'), and a footrest (4) that hinges at the vertex defined between the front vertical tube (1) and the upper horizontal tube (2), essentially characterized in that it incorporates a connection part (5) for the armrest which couples onto an attachment element (6) associated to upper horizontal tube (2), said connection part (5) being formed of plastic material with a curved shape and a curved variable section, its upper end being fitted with a hole (7) which incorporates the attachment element that secures it to the armrest (3), and furthermore being fitted at the lower end thereof with an inwardly folded central extension (8) wherefrom emerges a hook (9) which may be released from an opening (10) defined in attachment element (6) by pressing on the armrest connection part (5), and in that it features a connection part (11) for the footrest, formed by a slanting tubular portion (12) onto which is fitted the footrest (4) tube, a rear horizontal extension (13) deriving from it which is fitted with a vertical hole (14) on its opposite end that couples onto a stud (15) protruding from the front vertical tube (1) and is furthermore fitted with an actuator (16) in the form of a plate which pivots on respective internal stubs (25) in its front end in respect to horizontal extension (13) and exerts pressure on a shank (17) which is made to move inside hole (14) and contacts stud (15), offsetting it vertically and thus dislodging the footrest (4).

2. Wheelchair according to the preceding claim, characterized in that the central extension (8) of armrest connection part (5) extends further along hook (9), forming a lower projection (18) abutting inside armrest (3) when the hook (9) is coupled onto the attachment element (6).

3. Wheelchair according to claim 1, characterized in that the horizontal extension (13) of the footrest connection part (11) ends in an arched sector (19) adaptable over the front vertical tube (1).

4. Wheelchair according to claim 1, characterized in that it is provided with a wheel axis spindle (20) which incorporates radial grooves (21) inwardly ending in a T shape designed to secure the lower spoke ends, and is furthermore provided with a cover (22) with protrusions (23) which couple into holes (24) on the side of the spindle (20) to prevent the spokes from becoming dislodged.
